# EUROPEAN PATENT APPLICATION

(11) **EP 2 292 854 A2**
(43) Date of publication of application: **09.03.2011**
(21) Application number: 10165223.8
(22) Date of filing: 08.06.2010
(51) Int. Cl.: E03D 11/11

(54) **A waste water tank of a portable multifunctional toilet having a liquid level display structure and an exhaust valve**

(30) Priority: 08.09.2009 CN 200920175618 U
(71) Applicant: Ding, Limin, Qingdao City, Shandong (CN)
(72) Inventor: Ding, Limin, Qingdao City, Shandong (CN)
(74) Representative: Körber, Martin Hans

(57) **Abstract**

A waste water tank of a portable multifunctional toilet is provided. The waste water tank is a container having a tank body, and is provided with a liquid level display structure and an exhaust valve. The display structure comprises a buoyant support that is provided in the tank body at a position where it can not be touched by a long and straight article such as a brush entered from the outlet of the tank, the buoyant support is rotated about a buoyant support shaft which serves as a pivot shaft, and is sealed at the pivot shaft; the display structure further comprises a cone wheel provided at a contour of a upper edge of the tank body; the buoyant support applies magnetic force to the cone wheel through a wall of the tank body, the cone wheel is rotated by the rotational motion of the buoyant support so as to display the amount and the height of the content; the exhaust valve is arranged at the front part of the contour on the same side of the display structure, at a position where it can be conveniently operated by a person sitting on the toilet, the valve is a self-sealing structure comprising a spring and a sealing plate inside a sealing plug, wherein a channel of the exhaust valve is opened by downwardly pressing an exhaust button.

## Description

### Field of the Invention

The present invention relates to a relatively airtight container which is provided with an inductive liquid level display structure and is mounted with a self-sealing exhaust valve device, more particularly to a waste water tank of a portable flushing toilet, the waste water tank is provided with an inductive liquid level display structure and an exhaust valve device to form a portable multifunctional flushing toilet. The present invention belongs to the field of environmental health.

### Background of the Invention

The portable flushing toilet is widely applicable to such fields as outdoors, nursing care and vehicle mounting. Although there are quite a number of patents relating to the portable flushing toilet, no more feasible technical solutions of how to determine the amount of content in the waste water tank are available. The Chinese patent 200720183864.7 relates to the similar problem, but does not provide a complete implementation solution, thereby not being capable of solving the problem of how to be reliably mounted with the container itself as well as the problems of the reliable sealing of the container itself, and the reliable operation. A feasible solution relating to the exhaust valve structure of the like container is also not available, so that the pressure generated by filth in the waste water tank cannot be discharged, and the filth swashes outwards when the valve is opened, which is very unsanitary.

### Summary of the Invention

The present invention successfully realizes that a complicated buoyant support structure is reliably mounted in a small-opening container and then the container is reliably sealed. A display mechanism is mounted on the upper edge of the container, and the height of the filth inside the container is displayed by means of magnetic force induction so as to achieve the effect that the amount of the content is determined without directly observing the filth. Meanwhile, the present invention successfully and reliably realizes that the gas pressure generated by the filth is released through the exhaust valve, thereby being capable of easily reaching an ordinary pressure and preventing filth from swashing, so as to use the waste water tank more safely, sanitarily and cleanly.

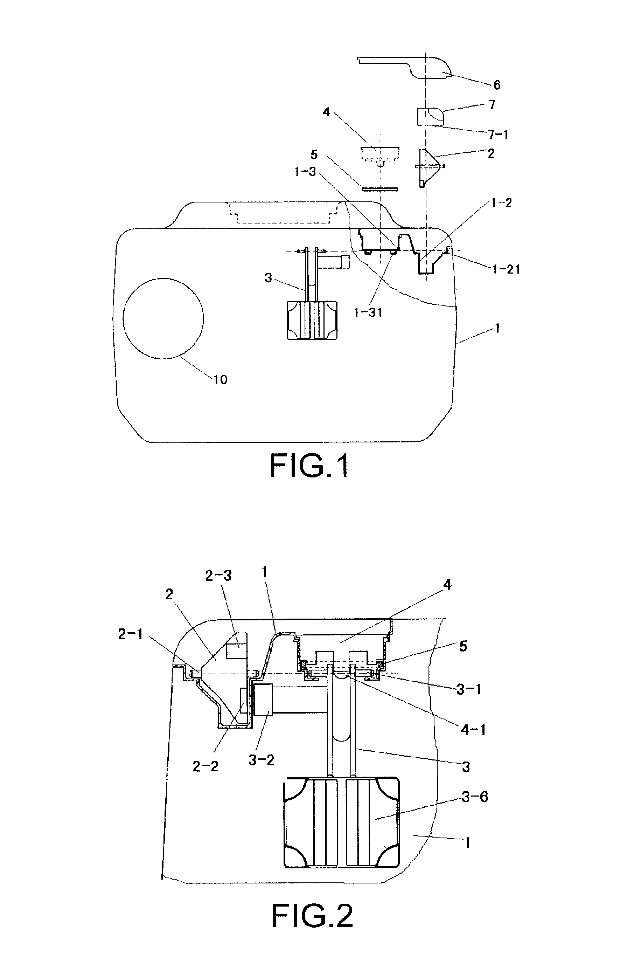

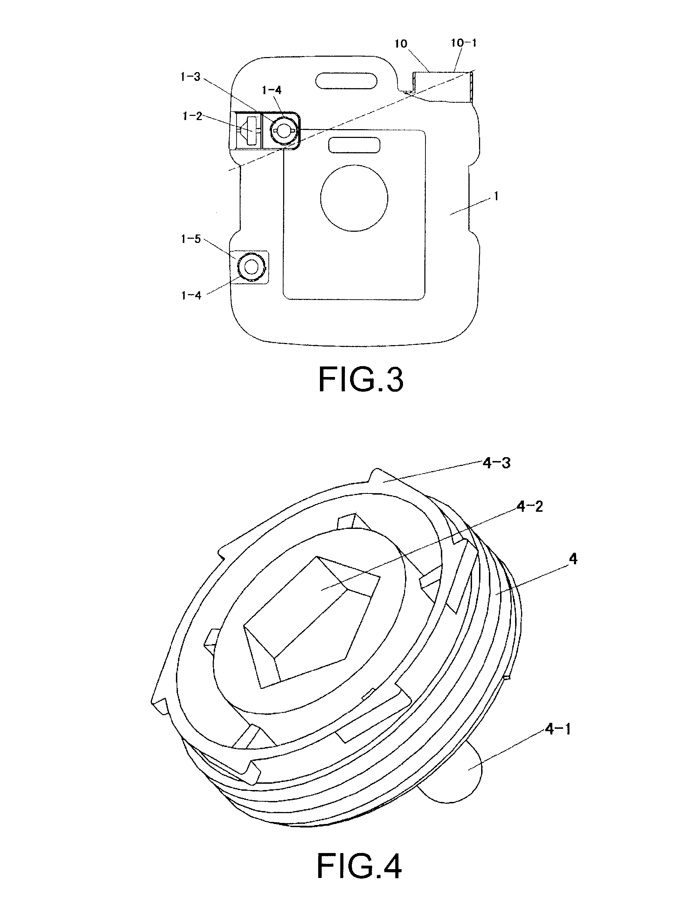

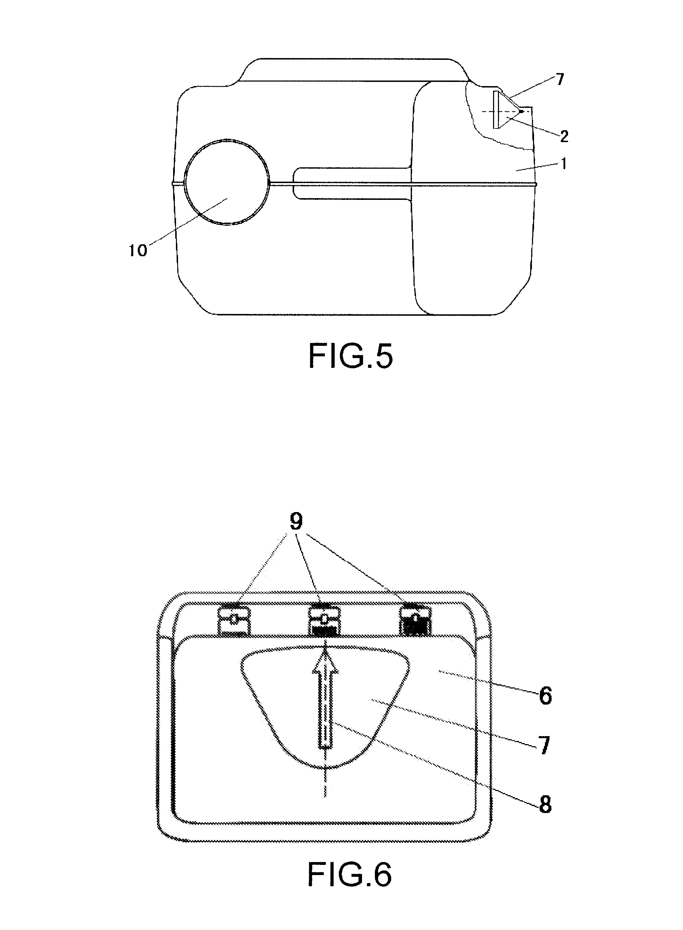

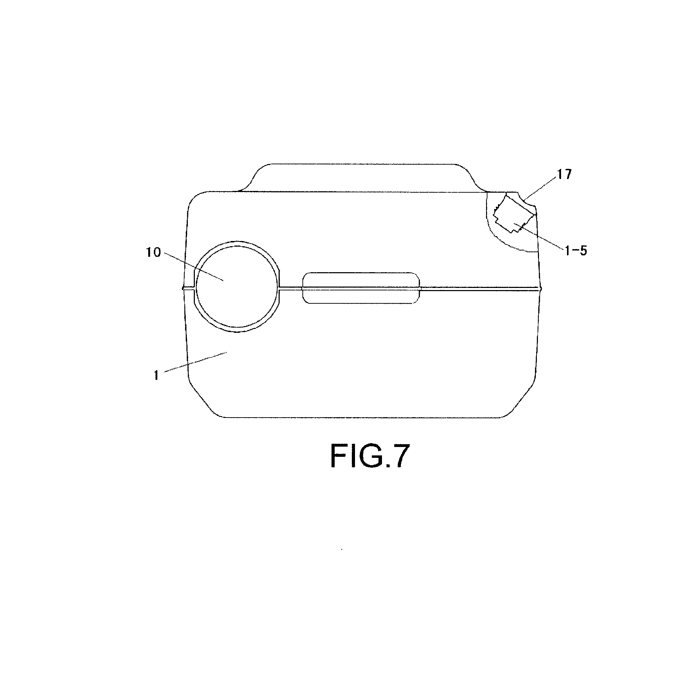

The technical solution is as follows:
□ The rising and falling of the buoyant on the buoyant support in the container are converted into the rotational motion of the support so as to rotate the magnet mounted at the other end of the support for radiating magnetic force through a tank body outwardly,
□ A magnet mutually induced with the magnet on the internal support is mounted on a cone wheel of the display structure component at the edge of the container so as to be rotated with the magnet on the support. A balancing weight is mounted at a position symmetrical from the magnet mounted on the cone wheel so as to guarantee a balancing and sensitive motion of the cone wheel. A scale mark on the cone wheel clearly shows the level of the content similar to a needle pointer of a meter.
□ The plane position of the induction display structure with rising and falling buoyant in the waste water tank is designed to be the position where the induction display structure can not be touched by a linear article such as a brush that is stretched into the container from its opening, as shown in Fig.3, while the spatial position of the induction display structure is designed at an angle of 45 degrees with respect to the contour of the container, which angle being the best angle for observation from the upper part, as shown in Fig.5.
□ The buoyant support is placed into an axle seat hole reserved in the container through an outlet of the container, and is sealed and fixed by a sealing plug integrated with an sealing ring, a cylindrical sealing plug, an inner-pentagon irregular-shaped screwing-down structure and an anti-loosing structure with a ratchet wheel, as shown in Fig.2.
□ An outer cover of a transparent window is provided outside the cone wheel for display, for protecting the reliable operation of the mechanism. A corresponding liquid level height schematic is inscribed thereon. The scale mark on the cone wheel, the green region at the left of the scale mark, the red region at the right of the scale mark, and the liquid level schematic on the cover constitute a combined display, for convenient and clear use by different people, as shown in Fig.6.
□ By screwing the exhaust valve at a corresponding position in the tank body, a sealing plate, a spring and the sealing ring are mounted at appropriate positions at the same time, and a non-return structure is brought into use and is sealed automatically. A button is encased from the outside and the outer cover is fixed, and the assembly is finished. When the button is pushed, air is discharged rapidly and immediately so that the gas pressure inside the tank returns to normal, as shown in Fig.7.

### Brief Description of the Drawings

Fig.1 is a schematic illustrating the final assembly of the liquid level display embodiment of the present invention.
Fig.2 is a schematic illustrating the assembly operation of the liquid level display embodiment of the present invention.
Fig.3 is a schematic illustrating the plane position of the liquid level display and the exhaust valve of the present invention.
Fig.4 is a schematic illustrating a liquid level display sealing plug and a non-return structure with a ratchet wheel.
Fig.5 is a side sectional schematic of the liquid level display of the present invention.
Fig.6 is a front schematic of the liquid level display part of the present invention.
Fig.7 is a side sectional schematic of the exhaust valve of the present invention.
Fig.8 is a schematic illustrating the final assembly of the exhaust valve of the present invention.
Fig.9 is a schematic illustrating the assembly operation of the exhaust valve embodiment of the present invention.
Fig.10 is a schematic illustrating a sealing plug of the exhaust valve and a non-return structure with a ratchet wheel.

### Specific Embodiments

A waste water tank 1 of a portable flushing toilet is shown in Fig.1. At the same time of molding the tank body of the waste water tank 1, axle seat 1-31 of support shafts, a threaded hole 1-3 of a sealing plug, an axle seat 1-21 of a cone wheel and an cone wheel mounting recess 1-2 are molded. Meanwhile, Fig.1 clearly indicates that the liquid level display mechanism is mounted on the contour of the waste water tank. Fig.5 clearly indicates the position of the liquid level display mechanism on the plan view of the waste water tank, the liquid level display mechanism being mounted at the top left corner region shown by dash line 10-1, where the liquid level display mechanism can not be touched by a long and straight article such as a brush stretched into the waste water tank 1 from the outlet 10 of the tank 1. The aim is that the internal structure could not be damaged easily during cleaning. An exhaust valve mounting hole 1-5 is located at a front position at the same side, as shown in Fig.5.

As shown in Fig.1, the buoyant is mounted at a actuation part 3-6 of the buoyant support causing the support to rise and fall, and the support 3 is mounted into the threaded hole 1-3 of the sealing plug and the axle seat of support shafts 1-31 from the outlet 10 of the waste water tank 1.

As shown in Fig.3, the hole for the sealing plug 4 and ratchet wheel 1-4 are one through hole formed by secondarily processing a molding product, for making the support shafts enter conveniently and making the tank body communicate with the outside conveniently.

As shown in Fig.2, after the support 3 is mounted at an appropriate position, the sealing ring 5 is placed inside, the sealing plug 4 is subsequently screwed into the appropriate position, and a positioning pin 4-1 inside the support stretches between the support shafts, so that the support shafts are permitted to rotate without falling off.

As shown in Fig.4, the screwing-in structure of the sealing plug is non-standard inner-pentagon structure, with the purpose of avoiding using a common tool to screw the sealing plug off. To prevent the threaded part from loosening and influencing the tightness, the present invention is additionally provided with an anti-loosing ratchet wheel structure. The ratchet wheel 1-4 can be screwed down only clockwise to press the sealing ring without the possibility of leakage due to loosing.

As shown in Fig.2, the support 3, the sealing ring 5 and the sealing plug 4 are mounted at appropriate positions to form a fully-sealed structure. The content inside the waste water tank does not leak out, saying nothing of being seen.

The cone wheel 2 is mounted into the recess 1-2 pre-molded on the waste water tank 1. The triangle shape of the cone naturally limits the mounting direction nonreversible, and avoids the occurrence of mounting error.

The rising and falling of the actuation part 3-6 of the support causes a rotational motion of the support about the support shafts 3-1, and drives the integrated magnet 3-2 to rotate. The magnetic force permeates the wall of the waste water tank through radiation, and the magnet 2-2 on the cone wheel 2 is induced and attracted, causing the synchronous rotation of the cone wheel, thereby realizing the function of displaying the height of the content in the waste water tank.

To make the cone wheel move sensitively and freely, a balancing weight 2-3 with the same weight as the magnet is additionally mounted at a symmetrical position with the magnet on the cone wheel taking the axle as the center.

As shown in Fig.1, after the cone wheel 2 and the sealing plug 4 are mounted to the waste water tank 1, in order to make the cone wheel normally and stably operate, an outer cover 6 is additionally mounted; meanwhile, a transparent window 7 is reserved, and both the outer cover and the transparent window are mounted at the waste water tank 1 sequentially by means of elastic clamp. After transparent window 7 is mounted at an appropriate position, a plane 7-1 presses a cone wheel shaft 2-1 in the axle seat 1-31 so that the cone wheel 2 can only rotate about its shaft 2-1.

As shown in Fig.5, the transparent window 7 on the contour position of the waste water tank displays in a direction of an angle of 45 degrees, with the purpose of ensuring that a person can look down the transparent window more conveniently and accurately when standing.

As shown in Fig.6, three marks of the portable flushing toilet are inscribed at the upper part of the transparent window from left to right, wherein the left mark represents the state of not full, the middle mark represents half full, and the right mark represents full.

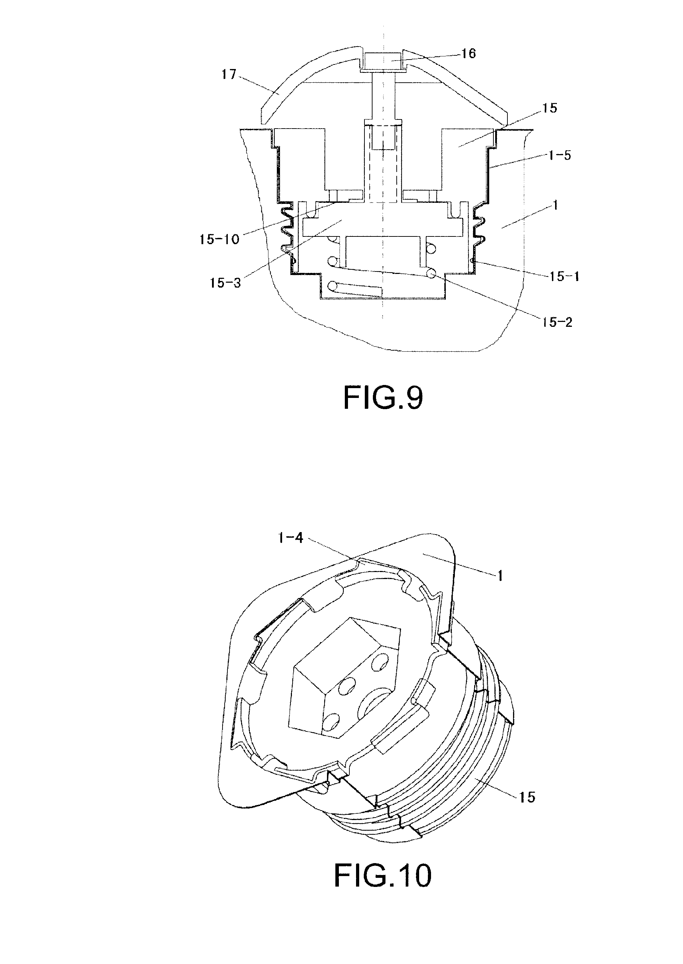

There is an upward white arrow 8 on the cone wheel at the part visible from the transparent window, the region at the right side of the arrow in green and the region at the left side of the arrow in red. When the waste water tank is not full, the arrow is at the left side, the arrow and only the green region are visible from the transparent window. When the waste water tank is half full, the arrow points to the middle part, with the right half part in green and the left half part in red. When the waste water tank is full, the arrow points to the right part, and only the red region is visible from the window. The liquid level of the content is displayed comprehensively, intuitively, iconically and in multi-level by the arrow, with the display manner of the toilet simulation schematic (Fig.9) and schematic colors of red and green complying with the international tradition, so that the display is widely suitable for persons in different countries and regions with different culture backgrounds to use it correctly.

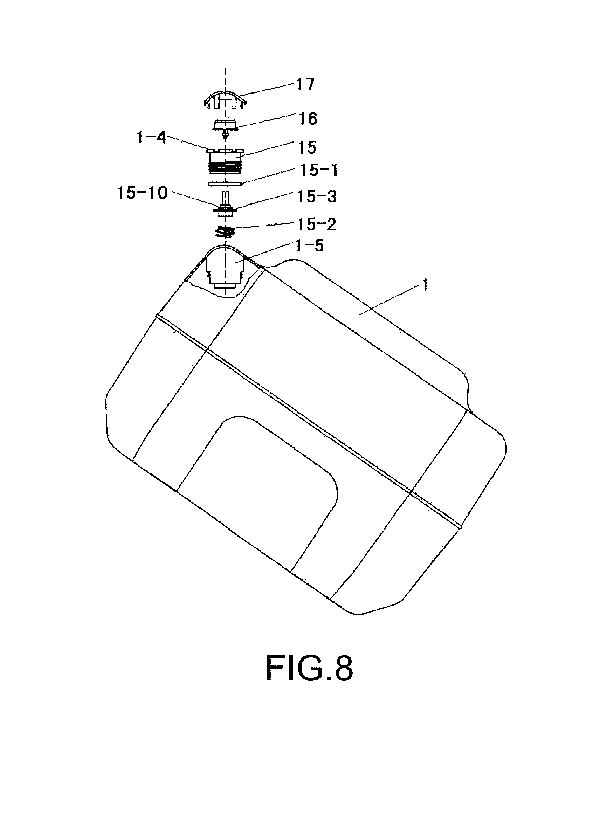

As shown in Figs.7-10, a threaded hole 1-5 of the exhaust valve is preformed on the tank body 1. A sealing valve plug 15 provided with a sealing ring 15-1, a spring 15-2 and a sealing plate 15-3 consisting of a soft material and a hard material is screwed in. After the sealing valve plug 15 is mounted at an appropriate position, loosing is effectively prevented by the non-return structure with a ratchet wheel. The spring 15-2 is compressed to form an expansionary force so that the sealing plate 15-3 and the operation surface of the sealing valve plug 15 are sealed and do not cause leakage. A button 16 is inserted into the sealing plate 15-3, and a button cover 17 is fixed and the assembly is finished. In operation, when the button is pushed downwards and the sealing plate 15-3 leaves the sealing surface, the inner space of the tank body is communicated with the outside, and the inner gas pressure reducing to be in a normal state.

## Claims

1. A waste water tank of a portable multifunctional toilet with a liquid level display structure and an exhaust valve, **characterized in that**:
the waste water tank is a container with a small-opening for containing filth, and has a tank body;
the liquid level display structure comprises a buoyant support that is provided in the tank body at a position where it can not be touched by a long and straight article such as a brush entered from an outlet, the buoyant support is rotated about a buoyant support shaft which serves as a pivot shaft, and is sealed at the pivot shaft reliably;
the liquid level display structure further comprises a cone wheel provided at a contour of a upper edge of the tank body;
the buoyant support applies a magnetic force to the cone wheel through a wall of the tank body, the cone wheel is rotated by the rotational motion of the buoyant support so as to display the amount and the height of the content in the waste water tank;
the exhaust valve is arranged at the front part of the contour of the upper edge on the same side of the liquid level display structure, at a position where it can be conveniently operated by a person sitting on the toilet,
the exhaust valve has a self-sealing structure comprising a spring and a sealing plate inside a sealing plug, wherein a channel of the exhaust valve is opened by downwardly pressing an exhaust button of the exhaust valve.

2. The waste water tank according to claim 1, **characterized in that**:
when the waste water tank is molded, a sealing structure, a screw structure and a non-return structure with a ratchet wheel, corresponding to the mounting structure of the cone wheel, the mounting structure of the buoyant support shaft and the mounting structure of the exhaust valve, are blow molded in one step by a mold at the same time.

3. The waste water tank according to claim 1 or 2, **characterized by**:
a sealing plug for mounting holes of the buoyant support shafts having:
a plug pin having a cylindrical end portion between the buoyant support shafts, so that the buoyant support shafts are axially and radially positioned in the axle seats;
a structure for mounting the sealing ring and a corresponding screw structure;
an inner-pentagon irregular-shaped structure at one screwed down end of the sealing plug to be prevented from being screwed off by a common tool at will;
a non-return structure with a ratchet wheel corresponding to a non-return structure with a ratchet wheel pre-molded on the tank body, so that the sealing plug does not release after being mounted at an appropriate position.

4. The waste water tank according to claim 1, 2 or 3, **characterized by**:
the cone wheel having:
a nonreversible mounting structure when mounted with the tank body;
a magnet and a balancing weight symmetrical with the magnet so that the cone wheel operates symmetrically and sensitively; and
a scale mark, the left side of which is in green and the right side in red;
wherein the cone wheel is rotated from left to right.

5. The waste water tank according to claim 4, **characterized in that**:
a transparent window is reserved at a position of the cone wheel, with a first schematic of being not full inscribed at the upper left portion of the window, a second schematic of being half full inscribed at the middle upper portion of the window, and a third schematic of being full inscribed at the upper right portion of the window, so as to display the height of the content together with the scale mark.

6. The waste water tank according to one of the claims 1 to 5, **characterized in that** :
the sealing plug comprising a structure for mounting the sealing ring and a corresponding screw structure, a venthole and a structure for mounting a sealing plate, and a positioning mounting structure for a built-in spring, so that the sealing plug is in a self-sealing state when the waste water tank is in a normal state;
the sealing plug further comprising an inside screw down structure and a screwed non-return structure with a ratchet wheel.
